## Europäisches Patentamt
## European Patent Office
## Office européen des brevets

(19)

(11) Veröffentlichungsnummer : **0 010 577**
**B1**

(12)
# EUROPÄISCHE PATENTSCHRIFT

(45) Veröffentlichungstag der Patentschrift :
**11.11.81**

(51) Int. Cl.³ : **G 01 N 21/59, G 01 N 33/48**

(21) Anmeldenummer : **79102800.4**

(22) Anmeldetag : **03.08.79**

(54) Verfahren zur Verminderung der Störung einer photometrischen Messung durch Lichtstreuung in einer zu messenden Suspension und Reagenz zur Durchführung des Verfahrens.

(30) Priorität : 01.11.78 CH 11239/78

(43) Veröffentlichungstag der Anmeldung :
**14.05.80 (Patentblatt 80/10)**

(45) Bekanntmachung des Hinweises auf die Patenterteilung : **11.11.81 Patentblatt 81/45**

(84) Benannte Vertragsstaaten :
**AT BE CH DE FR GB IT LU NL SE**

(56) Entgegenhaltungen :
**US - A - 3 853 465**

**US - A - 3 994 585**

**BULLETIN DES SCHWEIZERISCHEN ELEKTRO-TECHNISCHEN VEREINS (ASE/UCS), Band 67, Nr. 4, 21. Februar 1976, Zürich, CH**
R. FREY : « Eine neue Methode der Hämoglobin-bestimmung »,
Seiten 182-184

R. HENRY et al. : « Clinical chemistry principles and tecnics », 2. Ausgabe 1974, Teil 23, Vg. Harper & Row, Hagerstow, Md, US « Hemoglobins, Myoglobins and Haptoglobins », Seiten 1116-1214

**G.I.T. FACHZEITSCHRIFT FÜR LAVOR** Band 11, Nr. 11, November 1967, Darmstadt, DE A.V. KLEIN-WISENBERG et al. : « Standardisierung der Photometrie am Beispiel der Hämoglobinbestimmung », Seiten 1060-1072

**IEEE TRANSACTIONS ON BIO-MEDICAL ENGINEERING, Band BME-13, Nr. 4, Oktober 1966, New York, US**
G. TAIT et al. : « A theoretical analysis of somme errors in oxymetry », Seiten 200-205

**JOURNAL OF THE OPTICAL SOCIETY OF AMERICA, Band 60, Nr. 8, August 1970, New York, US**
V. TWERSKY : « Absorption and multiplice scattering by biological suspensions », Seiten 1084-1093.

(73) Patentinhaber : **CONTRAVES AG**
Schaffhauserstrasse 580
CH-8052 Zürich (CH)

(72) Erfinder : **Frey, Raymond, Dr.**
Schweigmatt 39
CH-8055 Zürich (CH)

(74) Vertreter : **Köver, François, Dr. et al**
Patentanwälte H.Mitscherlich K. Gunschmann, Dr. W. Körber, J.Schmidt-Evers Steinsdorfstrasse 10
D-8000 München 22 (DE)

Verfahren zur Verminderung der Störung einer photometrischen Messung durch Lichtstreuung in einer zu messenden Suspension und Reagenz zur Durchführung des Verfahrens.

Die Erfindung betrifft ein Verfahren zur Verminderung der Störung einer photometrischen Messung durch Lichtstreuung in einer zu messenden Suspension mit je einem einer Phase zugehörigen Brechungsindex.

Die Zählung der roten und weissen Blutkörperchen, oft kombiniert mit der Bestimmung der Hämoglobinkonzentration, wird seit Jahren mit teil- bis vollautomatischen Systemen durchgeführt. Das durch gerinnungshemmende Mittel ungerinnbar gemachte Vollblut besteht aus zellulären Bestandteilen wie Erythrozyten, Leukozyten, Thrombozyten sowie dem Plasma mit den darin gelösten Bestandteilen. Zur Zählung und evtl. gleichzeitiger Größenbestimmung der zellulären Bestandteile müssen diese für eine derartige Analyse zweckmässig aufbereitet werden. So liegen beispielsweise die Leukozyten und Erythrozyten in einem typischen Mengenverhältnis von Eins zu Tausend vor ; eine Zählung der Leukozyten würde also durch die zahlenmässig stark überwiegenden Erythrozyten erheblich gestört, beziehungsweise verunmöglicht. Man behilft sich mit Methoden, die eine weitgehende Elimination der Erythrozyten bewirken, ohne dabei die Menge der Leukozyten zu verändern. Ein bekannten Vorgehen ist die Hämolyse, welche die Erythrozyten in ihrer Form zerstört, das heißt in kleine Bruchteile aufspaltet, ohne dabei die Leukozytenzahl zu verändern. Bei der Zählung beispielsweise nach dem elektrischen Widerstandsverfahren können die Erythrozytenfragmente als Artefakte erkannt und von der Zahl der Leukozyten unterschieden werden. Das bei der Zerstörung der Erythrozyten freigesetzte Hämoglobin kann nebenbei, nach Zusatz weiterer Reagenzien noch photometrisch bestimmt werden.

Die simultane Bestimmung der Leukozyten und der Hämoglobinkonzentration aus solcherart aufbereiteten Proben ist zeitlich begrenzt, üblicherweise bleiben diese Proben ungefähr 20 Minuten stabil, in diesem Zeitraum muß die Analyse durchgeführt werden können.

Es ist ein Verfahren zur Bestimmung der Hämoglobinkonzentration bekannt (Bulletin des Schweizerischen Elektrotechnischen Vereins, Band 67, Nr. 4, Februar 1976, Seiten 182 bis 184), bei welchem das Hämoglobin durch Hämolyse freigesetzt und als Suspension der photometrischen Messung ausgesetzt wird. Dabei wird darauf verzichtet, vor Durchführung der Messung die verschiedenen Hämoglobinderivate durch Zugabe von Reagenzien in eine einheitliche Form überzuführen. Dieses Verfahren wird aufgrund der Kenntnis des Absorptionsverhaltens verschiedener Derivate ermöglicht und ist frei von den bekannten Nachteilen, die bei den mit chemischen Reaktionen arbeitenden Verfahren auftreten.

Es ist ein typisches Merkmal der hämolytischen Verfahren, daß wegen der großen Menge der in der Lösung vorliegeden Fragmente der Erythrozyten, aber auch wegen der zu zählenden und intakt verbliebenen Leukozyten, unspezifische Trübungen auftreten, die sich bei der photometrischen Messung des Hämoglobins störend auswirken. Man weiß aus der Nephelometrie, daß die von der streuenden Lösung ausgesandte Lichtintensität proportional zur Anzahl Kolloidteilchen sowie zu deren Volumen im Quadrat ist (RAYLEIGH). Die durch die Hämolyse bewirkte Zellauflösung in Fragmente verschiedener Größe und Anzahl erzeugt somit einen unkontrollierbaren Transmissionsverlust der durchstrahlten Suspension. Der durch die Dispersion verminderte Anteil des Lichtes im blauen Spektralbereich fällt bei der Hämoglobinmessung nicht ins Gewicht. Verändern die gebildeten Zellfragmente und auch die morphologisch veränderten Leukozyten nach der Hämolyse weiterhin ihr Volumen, so ist dieser Transmissionsverlust außerdem zeitabhängig. Die gemessene Extinktion ist also mit einem nicht systematischen und zeitabhängigen Fehler in Form einer zusätzlichen Pseudoextinktion behaftet und kann durch Eichvorgänge befriedigend kompensiert werden. Dieser Fehler kann bis zu 3-7 % des Hämoglobinwertes betragen.

Es ist die Aufgabe der vorliegenden Erfindung, für die Zubereitung von Suspensionen zur photometrischen Analyse, insbesondere für Suspensionen zur Bestimmung der Hämoglobinkonzentration ein Verfahren der eingangs genannten Art zu schaffen, durch welches die beschriebenen unspezifischen Trübungen eliminiert oder zumindest reduziert werden können, wobei die Leukozyten zur gleichzeitigen Zählung intakt bleiben sollen.

Diese Aufgabe wird durch die im Anspruch 1 angegebene Erfindung gelöst. Ein für die Lösung der Aufgabe bevorzugt zu verwendendes Reagens ist im Anspruch 3 angegeben.

Für die simultane Bestimmung der Hämoglobinkonzentration und der Leukozytenzahl wird

1. die Auflösung der Erythrozyten in möglichst kleine Zellfragmente, unter gleichzeitiger morphologischer Fixierung der Leukozyten herbeigeführt und

2. der Brechungsindex des Suspensionsmittels an den Brechungsindex der Erythrozytenfragmente sowie an den Brechungsindex der stabilisierten Leukozyten angepaßt.

Zur Durchführung der Erfindung wird ein Reagens mit beispielsweise folgender Zusammensetzung verwendet :

5-10 g Trimethyltetradecylammoniumbromid (Hämolysiermittel)

20-35 g Octylphenoldecaäthylenglykoläther (Hämolysierender Emulgator)

240-350 ml (Formaldehyd 37 % in Wasser (Leukozytenstabilisator)

ad 1 000 ml Isotonische Kochsalzlösung.

Das Hämolysiermittel hat als quaternäre Ammoniumverbindung eine auf Erythrozyten spezifische zellauflösende Wirkung, während die Leukozyten wohl morphologisch verändert aber zahlenmäßig erhalten bleiben.

Der Emulgator modifiziert den Brechungsindex des Suspensionsmittels derart, daß bei einer bestimmten Konzentration die Emulgator/Suspensionsmittel-Lösung einen ähnlichen Brechungsindex wie das Zellmaterial aufweist und die Streuung des Lichtes in der Zellsuspension unter eine tolerierbare Fehlergrenze vermindert wird. Dieser modifizierte Brechungsindex kann auch mit einer anderen Substanz, die einen genügend großen Brechungsindex und die nötige Löslichkeit beisitzt, hergestellt werden. Ein auf Erythrozyten spezifisch hämolysierend wirkender Emulgator unterstützt die hämolytische Wirkung des Hämolysiermittels ; eine praktisch quantitative und rasche Hämolyse kann dadurch erreicht werden.

Der Stabilisator hat durch seine Aldehydgruppe eine konservierende Wirkung auf die Leukozyten, das heißt, die Zellen werden morphologische fixiert. Die Anzahl der in der Suspension vorhandenen Leukozyten wird dadurch stabilisiert und kann mit elektronischen Mitteln bestimmt werden.

Um einen optimalen Effekt, also eine rasche und selektive Hämolyse der Erythrozyten, eine weitgehende Elimination der Trübung und eine hinreichende Stabilität der Leukozytenzahl zu erzielen, müssen die drei Reagenskomponenten in ausgewogener Kombination in der Suspension vorliegen. Diesen Effekt erhält man innerhalb den im Beispiel angegebenen Konzentrationsintervallen. Wird das solchermaßen hergestellte Reagens im Verhältnis von 1 Teil Reagens zu 99 Teilen einer zur Messung vorbereiteten Blutprobe zugegeben, so setzt eine rasche Hämolyse ein, das Hämoglobin wird in seinen in der Erythrozyten vorliegenden Derivaten befreit und die Konzentrationsbestimmung ist unmittelbar danach mit den geeigneten Methoden durchführbar. Die hämolysierte und stabilisierte Zellsuspension zur Bestimmung von Hämoglobin und Leukozyten bleibt 30 bis 60 Minuten lang stabil.

## Ansprüche

1. Verfahren zur Verminderung der Störung einer photometrischen Messung durch Lichtstreuung in einer zu messenden Suspension mit je einem einer Phase zugehörigen Brechungsindex, gekennzeichnet durch das Beimischen eines Zusatzes mit einem derart gewählten Brechungsindex, daß der mittlere Brechungsindex der suspendierten Phasen zwischen den Brechungsindizes des reinen Suspensionsmittels und des reinen Zusatzes liegt, und in einer derart gewählten Menge, daß sich der Brechungsindex des Gemisches von Suspensionsmittel und Zusatz dem mittleren Brechungsindex der suspendierten Phasen annähert.

2. Verfahren nach Anspruch 1 mit einer Suspension aus hämolysierten Erythrozyten und stabilisierten Leukozyten in isotonischer Kochsalzlösung, dadurch gekennzeichnet, dass der Zusatz ein hämolysierender Emulgator ist.

3. Reagens zur Verminderung der Störung einer photometrischen Messung durch Lichtstreuung in einer Suspension von Blutkörperchen in einem isotonischen Suspensionsmittel, enthaltend.
   a) ein Hämolysiermittel
   b) ein Mittel zum Modifizieren des Brechungsindexes der Suspensionsmittels
   c) ein Mittel zum Stabilisieren der Leukozyten
   d) ein Lösungsmittel.

4. Reagens nach Anspruch 3, enthaltend :
   5-10 g Trimethyltetradecylammoniumbromid
   20-35 g Octylphenoldecaäthylenglykoläther
   240-350 ml Formaldehyd 37 % in Wasser
   ad 1 000 ml Iostonische Kochsalzlösung

## Claims

1. A method of reducing interference due to light scattering in a suspension to be measured by photometric measurement, each phase of the suspension having a respectively related refractive index, characterized in that there is admixed to the suspension an additive selected for having a refractive index such that the mean refractive index of the suspended phases is encompassed between the refractive indices of the pure suspending agent and of the pure additive, the admixture being effected in such quantity that the refractive index of the mixture of suspending agent and additive becomes close to the mean refractive index of the suspended phases.

2. A method according to claim 1 as applied to a suspension of haemolysed erythrocytes and of stabilised leucocytes in an isotonic common salt solution, characterized in that the additive is a haemolysing emulsifier.

3. A reagent for reducing interference due to light scattering in a suspension to be measured by photometric measurement, the suspension being of blood corpuscles in an isotonic suspension agent, the reagent comprising
   a) a haemolysing agent
   b) an agent for modifying the refractive index of the suspending agent
   c) an agent for stabilizing the leucocytes
   d) a solvent.

4. A reagent according to claim 4, comprising
   5-10 g of trimethyltetradecylammonium bromide
   20-35 g of octylphenoldecaethyleneglycol ether
   240-350 ml of formaldehyde as a 37 % aqueous solution
   q.s.p. 1 000 ml of isotonic common salt solution.

## Revendications

1. Procédé destiné à réduire la perturbation d'une mesure photométrique due à la diffusion de la lumière au sein d'une suspension à mesurer dont chaque phase est affectée d'un indice de réfraction correspondant, caractérisé en ce que l'on incorpore à la suspension un additif choisi avec un indice de réfraction tel que l'indice moyen de réfraction des phases en suspension est compris entre les indices de réfraction de l'agent de suspension pur et de l'additif pur et incorporé en quantité telle que l'indice de réfraction du mélange d'agent de suspension et d'additif se rapporche de l'indice moyen de réfraction des phases en suspension.

2. Procédé selon la revendication 1 appliqué à une suspension d'érythrocytes hémolysés et de leucocytes stabilisés dans une solution saline isotonique, caractérisé en ce que l'additif est un émulsifiant hémolysant.

3. Réactif destiné à réduire la perturbation d'une mesure photométrique due à la diffusion de la lumière au sein d'une suspension de particules sanguines dans un agent de suspension isotonique, comprenant
a) un agent hémolysant
b) un agent modifiant l'indice de réfraction de l'agent de suspension
c) un agent stabilisant les leucocytes
d) un solvant.

4. Réactif selon la revendication 3, comprenant
5 à 10 g de bromure de triméthyltétradécylammonium
20 à 35 g d'éther d'octylphénol-décaéthylèneglycol
240 à 350 ml de formaldéhyde en solution aqueuse à 37 %
q.s.p. 1 000 ml de solution saline isotonique.